# EUROPEAN PATENT SPECIFICATION

(11) **EP 0 608 606 B1**
(45) Date of publication and mention of the grant of the patent: **23.10.1996**
(21) Application number: 93309138.1
(22) Date of filing: 16.11.1993
(51) Int. Cl.: B01D 53/26, B60T 17/00

(54) **Gas drying apparatus**
Vorrichtung zur Gastrocknung
Dispositif de séchage de gaz

(30) Priority: 18.11.1992 GB 9224162
(43) Date of publication of application: 03.08.1994
(73) Proprietor: Knorr-Bremse Systems for Commercial Vehicles Limited, Kingswood, Bristol BS15 2NL (GB)
(72) Inventor: Oliver, Patrick Ronald, Longwell Green, Bristol BS15 6BE (GB)
(74) Representative: Turner, Alan Reginald

(56) References cited:
- EP-A- 0 210 363
- EP-A- 0 365 066
- DE-A- 3 636 142
- GB-A- 2 126 124

## Description

This invention relates to gas drying apparatus and relates especially to a replaceable gas dryer cartridge for use with an air dryer suitable for removing moisture from a stream of compressed air produced by a compressor for a compressed air vehicle braking system.

In compressed air vehicle braking systems it is desirable to remove as much aqueous moisture as possible from the stream of compressed air emanating from a compressor before the compressed air reaches storage reservoirs for subsequent use in the braking system. This is particularly important in cold weather conditions when freezing of condensed moisture can result in malfunction or even failure of critical valves or other components of the system.

An air dryer for a vehicle compressed air braking system usually comprises a housing containing a granular desiccant material through which compressed air is driven on its way to the storage reservoirs. Although means is provided for periodically purging the desiccant by dry air, in order to expel absorbed moisture, it is necessary to replenish the desiccant at regular intervals owing to the fact that it becomes progressively less effective in use and suffers from contamination by carbon or oil contaminants and breaking down of the granules.

Various constructions have been proposed for such air dryers in the past but more recently in order to provide a compact assembly and afford a convenient way for vehicle operators to replace the desiccant and other expendable internal filter elements in the air dryer, it has been proposed to provide so-called "easy change" desiccant cartridges similar to now-familiar cartridges available for oil filter replacements on automobile engines. Essentially, the air dryer may be generally of a type the body of which is provided with an air egress passage through an externally screw-threaded spigot and disposed radially outward of the egress passage there are passages which communicate with a threaded screw-on housing in the form of a cartridge retained by screwing same onto the spigot. A resilient rubber seal provides sealing of the whole canister against the body of the air dryer unit. An air dryer of this general type is described in European Patent Specification No. 0123843.

Such air dryer cartridges although produced in large volumes tend to be quite expensive to manufacture and an object of the present invention is to provide such a cartridge which is less expensive to produce.

According to the present invention there is provided a replaceable gas drying apparatus including a main body having a gas input port, a gas delivery port and retaining means for the cartridge, the cartridge comprising a generally cylindrical housing with an attached closure member at an open end having means for cooperating with the retaining means for sealingly engaging said body to define an inflow path from said input port through said desiccant and out via the delivery port, characterised by the housing having an internal divider extending axially in the direction from said closure member into desiccant contained by the housing to divide it into inner and outer flow paths in series and resilient compacting means, including a gas permeable plate, urging the surface of the desiccant in one said flow path away from said closure member.

In order that the invention may be more clearly understood and readily carried into effect the same will be further described by way of an example as illustrated in the accompanying drawings of which:-
Fig. 1 illustrates a typical air dryer such as is used in vehicle compressed air braking systems
Fig 2 illustrates a sectional diagrammatic view of a detachable cartridge for an air dryer in accordance with the invention
Fig 3 illustrates an exploded view of the components of the cartridge of Fig 2 and

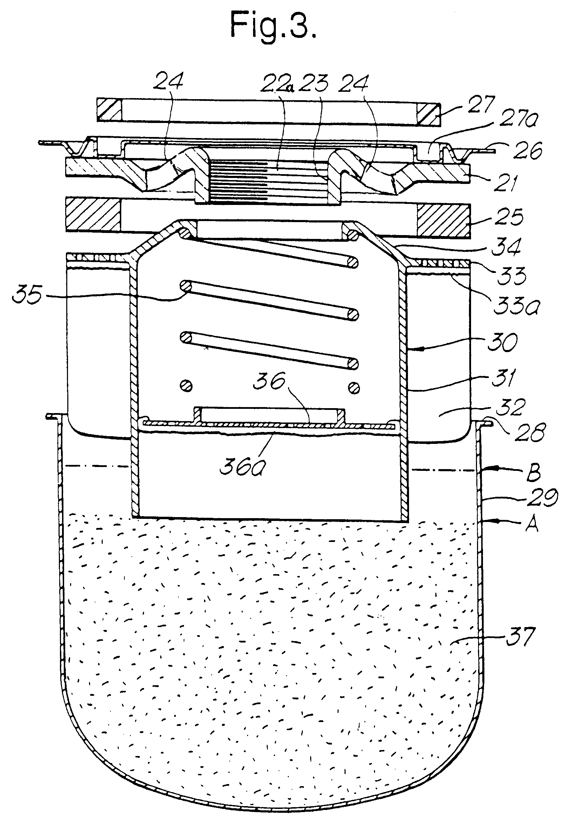

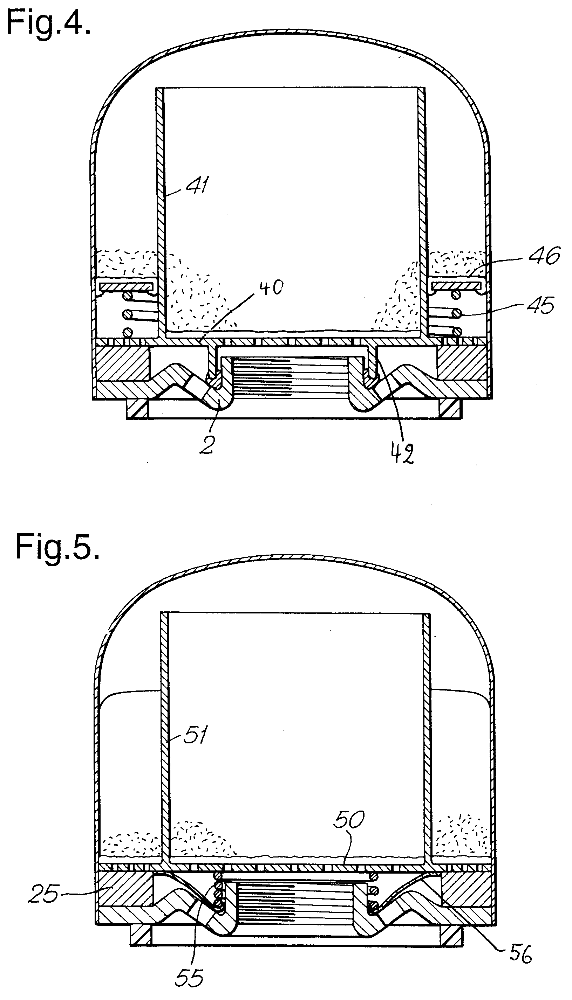

Figs. 3 and 4 illustrate alternative embodiments.

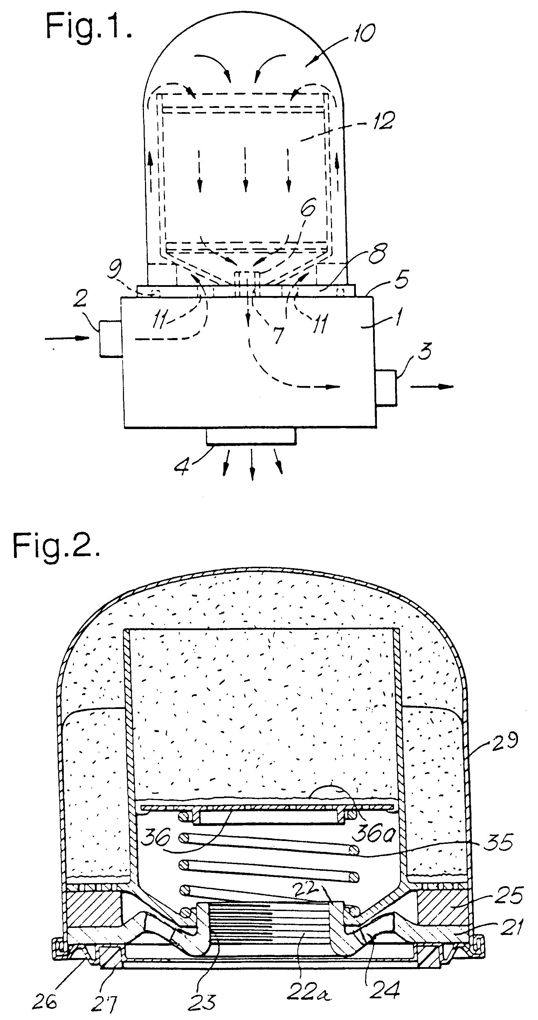

Referring to Fig 1 the air dryer comprises a main body 1 having a compressed air input port 2, a delivery port 3 and a purge or venting port 4. The body 1 has a flat upper surface 5 at the centre of which there is a screw-threaded tubular spigot 6 which matches a complimentarily threaded aperture 7 of a base plate 8 of a housing in the form of a desiccant cartridge 10. Base plate 8 carries a peripheral seal 9 providing sealing of plate 8 with surface 5 of the body 1. The interior of the air dryer may be of generally known form whereby compressed air received from a compressor passes into the body via port 2 and is directed via ports such as 11 upwardly around the outside of a central body 12 of desiccant before being directed downwards through the desiccant towards the delivery port 3 via the tubular spigot 6.

Although not shown in Fig 1, it is to be appreciated that the air dryer body is provided with a purge valve mechanism which is activated from time to time to pass a metered reverse flow of dry air from the reservoir through the desiccant and out via port 4, to regenerate the desiccant in known manner. Usually such a purge cycle is arranged to occur in intervals when the compressor is off-load. In spite of such regeneration of the desiccant, it is necessary to replace it at suitable service intervals and this is readily achieved by unscrewing the complete cartridge from spigot 6 and replacing it with a new or reconditioned cartridge.

Referring to the sectional view of the cartridge in Fig. 2 and the exploded view in Fig. 3, the particularly simple and advantageous alternative of the cartridge constructed according to the invention is now to be appreciated.

The cartridge of the invention is constructed in the example with a circular base plate 21 formed to provide an inwardly extending port 22 having a central aperture 22a with an internal screw-thread 23 to be received by the central spigot 6 of an air dryer such as that of Fig.1. The plate 21 also has further apertures 24 which provide communication from the input port 2 to the contained desiccant via an intermediate annular mesh oil filter 25. Welded to the exterior surface of the plate 21 is an annular steel pressing 26 which is formed to receive an annular synthetic rubber seal (27) which provides the peripheral seal between the cartridge and the surface 5 of the air dryer body (Fig.1). Moreover the periphery of pressing 26 is of greater circumference than an outward lip 28 of a pressed steel dome-shaped shell 29 so that the former can be rolled around the lip 28 to seal the cartridge. Within the cartridge there is a moulded plastic insert 30 having a solid cylindrical wall 31 joining an annular perforated wall 33 and a wall 34 which sealingly engages around the inwardly extending port 22 of plate 21. The perforated wall 33 is clad with air-permeable polyester cloth 33a. Mutually equally spaced, outwardly radially extending ribs 32 are provided on wall 31 of the insert 30 to afford axial alignment thereof within the shell 29 and a helical compression spring is located between the frusto conical wall 34 and a perforated plastic compacting plate 36. The plate 36 is clad with an air permeable polyester cloth 36a.

In order to assemble this cartridge the shell 29 is supported base upwards as seen in Fig.3 to receive a measured volume of desiccant granules 37 which thereby fill the shell to a level 'A'. The other components with the exception of 27 are then assembled in the order shown and pressed into position, the skirt 31 penetrating into the granules and the spring loaded compacting plate 36 forcing granules downwards to cause upward flow to a level 'B' when the steel pressing 26 reaches and engages the lip 28 of the shell. A rolling or seaming operation then joins the periphery of 26 to lip 28 to complete the assembly. The seal 27 is of course inserted in its groove 27a before the cartridge is fitted to the body portion of the air dryer.

From the foregoing it will be observed that a simple and potentially inexpensive cartridge is enabled to be produced by virtue of the invention. The relative dimensions of the annular region formed on the one hand between the wall 31 and the adjacent wall of the shell 29 and on the other hand of the cylindrical body of desiccant contained within the wall 31 are preferably chosen to suitably distribute the air flow and drying process over a substantially longer flow path than would be provided within previously known cartridges of approximately the same external dimensions with a single upward pass of the air flow. Moreover this result is achievable using a minimum of low-cost components.

In the embodiment which has been described in the foregoing, the resilient compressive means comprises a compacting plate 36 and a helical compression spring acting on the end of the inner body of desiccant. However, in a modified form of construction as illustrated in Fig. 4, the divider comprises a complete disc 40 with an upwardly extending generally cylindrical wall 41 and a downwardly extending cylindrical barrier 42 which sealingly engages the plate 2 to separate the inflow from the outflow. In addition, there is an annular compacting plate 46 and a compression spring 45 which now act upon the end of the outer body of desiccant. In his case the spacer such as 32 referred to above may be omitted. The operation of the air dryer cartridge is substantially as that of Figs. 2 and 3.

In yet another embodiment as illustrated in Fig. 5, there is no separate compacting plate. The disc 50 which supports the generally cylindrical dividing wall 51 is provided with a helical compression spring 55 which therefor causes the disc 50 to act on the whole body of desiccant. in order to separate the inflow from the outflow, a flexible wall 56 is provided which sealingly engages the underside of plate 50 and the plate 21. Means is also provided (not shown) for attaching the filter 25 to the disc 50. Again, the operation is substantially as before the spring 55 maintaining the desiccant compacted.

## Claims

1. A replaceable gas drying cartridge for drying apparatus including a main body (1) having a gas input port (2), a gas delivery port (3) and retaining means (6) for the cartridge, the cartridge comprising a generally cylindrical housing (29) with an attached closure member (21, 26) at an open end having means (23, 27) for cooperating with the retaining means (6) for sealingly engaging said body to define an inflow path from said input port through said desiccant and out via the delivery port, characterised by the housing having an internal divider (31) extending axially in the direction from said closure member (21) into desiccant (37) contained by the housing (29) to divide it into inner and outer flow paths in series and resilient compacting means (35, 36), including a gas permeable plate (36, 36a), urging the surface of the desiccant in one said flow path away from said closure member.

2. A replaceable gas drying cartridge as claimed in claim 1, characterised in that said resilient compacting means (45, 46) urges the surface of the desiccant in the outer flow path away from said closure member.

3. A replaceable gas drying cartridge as claimed in claim 1, characterised in that said resilient compacting means (50, 55) urges the surface of the desiccant in inner and outer flow paths away from the closure member.

4. A replaceable gas drying cartridge as claimed in claim 1, characterised in that said resilient compacting means (35, 36) urges the surface of the desiccant in the inner flow path away from the closure member.

5. A replaceable gas drying cartridge as claimed in claim 1, 3 or 4, characterised in that said internal divider (31) is provided with spacing elements (32) centralising said divider in the housing.

6. A replaceable gas drying cartridge as claimed in any of claims 1 to 5 characterised in that said divider is cylindrical.

7. A replaceable gas drying cartridge as claimed in any of claims 1 to 6 characterised in that said divider is integral with a plate which defines a limit for movement of desiccant towards the closure member (21).

8. A replaceable gas drying cartridge as claimed in claim 7 characterised in that a filter (25) is included between said plate and the closure member in the flow path for air from the inflow port to the desiccant.

## Patentansprüche

1. Auswechselbare Gastrocknungspatrone für eine Trocknungsvorrichtung, mit einem Hauptkörper (1), welcher eine Gaseinlaßöffnung (2), eine Gasauslaßöffnung (3) und eine Halteeinrichtung (6) für die Patrone hat, wobei die Patrone ein im allgemeinen zylindrisches Gehäuse (29) mit einem daran angebrachten Verschlußelement (21, 26) an einem offenen Ende aufweist, welches eine Einrichtung (23, 27) zum Zusammenarbeiten mit der Halteeinrichtung (6) aufweist, um in dicht schließendem Eingriff mit dem Körper einen inneren Strömungsweg von der Einlaßöffnung über ein Trocknungsmittel und heraus über die Auslaßöffnung zu bilden, **dadurch gekennzeichnet**, daß das Gehäuse eine Innenunterteilungseinrichtung (31) aufweist, welche sich axial in Richtung von dem Verschlußelement (21) in das Trocknungsmittel (37) erstreckt, welches in dem Gehäuse (29) enthalten ist, um die inneren und äußeren Strömungswege hintereinander zu unterteilen, und daß eine federnd nachgiebige Verdichtungseinrichtung (35, 36) mit einer gasdurchlässigen Platte (36, 36a) vorgesehen ist, welche die Oberfläche des Trocknungsmittels in einem Strömungsweg von dem Verschlußelement wegdrückt.

2. Auswechselbare Gastrocknungspatrone nach Anspruch 1, **dadurch gekennzeichnet**, daß die federnd nachgiebige Dichtungseinrichtung (45, 46) die Oberfläche des Trocknungsmittels in dem äußeren Strömungsweg von dem Verschlußelement wegdrückt.

3. Auswechselbare Gastrocknungspatrone nach Anspruch 1, **dadurch gekennzeichnet**, daß die federnd nachgiebige Verdichtungseinrichtung (50, 55) die Oberfläche des Trocknungsmittels im inneren und äußeren Strömungsweg von dem Verschlußelement wegdrückt.

4. Auswechselbare Gastrocknungspatrone nach Anspruch 1, **dadurch gekennzeichnet**, daß die federnd nachgiebige Verdichtungseinrichtung (35, 36) die Oberfläche des Trocknungsmittels im inneren Strömungsweg von dem Verschlußelement wegdrückt.

5. Auswechselbare Gastrocknungspatrone nach Anspruch 1, 3 oder 4, **dadurch gekennzeichnet**, daß die Innenunterteilungseinrichtung (31) mit Distanzelementen (32) versehen ist, welche die Unterteilungseinrichtung im Gehäuse zentrieren.

6. Auswechselbare Gastrocknungspatrone nach einem der Ansprüche 1 bis 5, **dadurch gekennzeichnet**, daß die Unterteilungseinrichtung zylindrisch ausgebildet ist.

7. Auswechselbare Gastrocknungspatrone nach einem der Ansprüche 1 bis 6, **dadurch gekennzeichnet**, daß die Unterteilungseinrichtung integral mit einer Platte ausgebildet ist, welche eine Begrenzung für die Bewegung des Trocknungsmittels in Richtung zu dem Verschlußelement (21) bildet.

8. Auswechselbare Gastrocknungspatrone nach Anspruch 7, **dadurch gekennzeichnet**, daß ein Filter (25) zwischen der Platte und dem Verschlußelement im Strömungsweg für die Luft von der Einlaßöffnung zu dem Trocknungsmittel vorgesehen ist.

## Revendications

1. Cartouche remplaçable de séchage de gaz pour le séchage d'un appareil comprenant un corps principal (1) comportant un orifice (2) d'entrée de gaz, un orifice (3) de sortie de gaz et des moyens (6) de retenue pour la cartouche, la cartouche comprenant un boîtier (29) de forme générale cylindrique avec un organe de fermeture (21, 26) fixé à une extrémité ouverte comportant des moyens (23, 27) destinés à coopérer avec les moyens de retenue (6) pour venir s'engager de façon étanche avec ledit corps afin de définir un trajet de flux entrant en provenance dudit orifice d'entrée et traversant ledit déshydratant et sortant par l'orifice de sortie, ladite cartouche étant caractérisée en ce que le boîtier comprenant un diviseur interne (31) s'étendant axialement dans la direction allant depuis ledit organe de fermeture (21) en pénétrant dans le déshydratant (37) contenu par le boîtier (29) de façon à le diviser en des trajets de flux interne et externe en série et des moyens de compactage élastiques (35, 36), comprenant une plaque perméable au gaz (36, 36a), qui pressent la surface du déshydratant dans l'un desdits trajets de flux en l'écartant dudit organe de fermeture.

2. Cartouche remplaçable de séchage de gaz selon la revendication 1, caractérisée en ce que lesdits moyens de compactage élastiques (45, 46) pressent la surface du déshydratant dans le trajet du flux externe en l'écartant dudit organe de fermeture.

3. Cartouche remplaçable de séchage de gaz colon la revendication 1, caractérisée en ce que lesdits moyens de compactage élastiques (50, 55) pressent la surface du déshydratant dans les trajets de flux interne et externe en l'écartant de l'organe de fermeture.

4. Cartouche remplaçable de séchage de gaz selon la revendication 1, caractérisée en ce que lesdits moyens de compactage élastiques (35, 36) pressent la surface du déshydratant dans le trajet de flux interne en l'écartant de l'organe de fermeture.

5. Cartouche remplaçable de séchage de gaz selon la revendication 1, 3 ou 4, caractérisée en ce que ledit diviseur interne (31) comporte des éléments d'entretoisement (32) qui centrent ledit diviseur dans le boîtier.

6. Cartouche remplaçable de séchage de gaz selon l'une quelconque des revendications 1 à 5, caractérisée en ce que ledit diviseur est cylindrique.

7. Cartouche remplaçable de séchage de gaz selon l'une quelconque des revendications 1 à 6, caractérisée en ce que ledit diviseur est solidaire d'une plaque qui définit une limite de déplacement du déshydratant en direction de l'organe de fermeture (21).

8. Cartouche remplaçable de séchage de gaz selon la revendication 7, caractérisée en ce qu'un filtre (25) est compris entra ladite plaque et l'organe de fermeture dans le trajet du flux pour l'air provenant de l'orifice de flux d'entrée en direction du déshydratant.
